# EUROPÄISCHE PATENTANMELDUNG

(11) **EP 4 191 448 A1**
(43) Veröffentlichungstag der Anmeldung: **07.06.2023**
(21) Anmeldenummer: 21212249.3
(22) Anmeldetag: 03.12.2021
(51) Int. Cl.: G06F 21/44, G06F 21/10, G06F 21/16, G06N 20/00, G06N 3/02, G06F 21/88

(54) **VERFAHREN ZUR DIEBSTAHLERKENNUNG VON TRAINIERTEN MASCHINENLERNMODULEN SOWIE DIEBSTAHLMELDESYSTEM**

(71) Anmelder: Siemens Aktiengesellschaft, 80333 München (DE)
(72) Erfinder: Scharinger, Boris, 90762 Fürth (DE); Strixner, Ferdinand, 81739 München (DE); Tokic, Michel, 88069 Tettnang (DE); von Beuningen, Anja, 99085 Erfurt (DE)
(74) Vertreter: Siemens Patent Attorneys

(57) **Zusammenfassung**

Erfindungsgemäß wird eine Maskierungsinformation (MK) eingelesen, durch die ein hinsichtlich der Steuerung der Maschine (M) tolerierbarer Teil eines Ausgabesignals (AS) eines ersten Maschinenlernmoduls (NN) spezifiziert wird. Weiterhin wird das erste Maschinenlernmodul (NN) um eine zusätzliche Ausgabeschicht (OL') erweitert, in die das Ausgabesignal (AS) eingespeist wird, die anhand der Maskierungsinformation (MK) in den tolerierbaren Teil des Ausgabesignals (AS) ein digitales Wasserzeichen (WM) einfügt, und die das so modifizierte Ausgabesignal (AS(WM)) ausgibt. Das erweiterte erste Maschinenlernmodul (NN(WM)) wird dann zu einem Anwender übermittelt. Bei einem empfangenen zweiten Maschinenlernmodul (NN(WM)) wird anhand der Maskierungsinformation (MK) geprüft, ob der tolerierbare Teil eines Ausgabesignals (AS) des zweiten Maschinenlernmoduls (NN(WM)) das digitale Wasserzeichen (WM) enthält. Abhängig vom Prüfungsergebnis wird dann ein Alarmsignal (A) ausgegeben.

Alternativ oder zusätzlich zur zusätzlichen Ausgabeschicht (OL') kann ein bei einer Steuerung der Maschine (M) nicht auftretendes Test-Eingabesignal (TST) in das erste Maschinenlernmodul (NN) eingespeist werden. Ein daraus resultierendes Ausgabesignal des ersten Maschinenlernmoduls (NN) wird dann als digitales Wasserzeichen (WM) gespeichert und bei einer Prüfung des zweiten Maschinenlernmoduls (NN(WM)) verwendet.

## Beschreibung

Komplexe Maschinen, wie z.B. Roboter, Motoren, Fertigungsanlagen, Werkzeugmaschinen, Gasturbinen, Windturbinen oder Kraftfahrzeuge benötigen für einen produktiven und stabilen Betrieb in der Regel komplexe Steuerungs- und Überwachungsverfahren. Zu diesem Zweck werden in zeitgemäßen Maschinensteuerungen häufig Techniken des maschinellen Lernens eingesetzt. So kann z.B. ein neuronales Netz als Steuermodell darauf trainiert werden, eine Maschine in optimierter Weise zu steuern.

Ein Training von neuronalen Netzen oder anderen Maschinenlernmodulen zum Steuern von komplexen Maschinen erweist sich indessen häufig als sehr aufwendig. So werden in der Regel große Mengen von Trainingsdaten, erhebliche Rechenressourcen sowie viel spezifisches Expertenwissen benötigt. Mithin besteht ein großes Interesse daran, trainierte Maschinenlernmodule gegen eine unkontrollierte oder unberechtigte Verbreitung zu schützen und insbesondere einen Diebstahl zu erkennen.

Es ist bekannt, zur Diebstahlerkennung von trainierten neuronalen Netzen deren neuronale Gewichte mit einem eindeutigen digitalen Wasserzeichen zu versehen, bevor sie in Verkehr gebracht werden. Anhand des Wasserzeichens kann dann ein vorliegendes neuronales Netz daraufhin geprüft werden, ob es vom Verwender des Wasserzeichens stammt. Das vorstehende Verfahren setzt allerdings einen Zugriff auf die neuronalen Gewichte oder auf das Training des neuronalen Netzes voraus. Von Dritten trainierte neuronale Netze können so nicht ohne Weiteres markiert werden.

Es ist Aufgabe der vorliegenden Erfindung, ein Verfahren zur Diebstahlerkennung eines trainierten Maschinenlernmoduls sowie ein entsprechendes Diebstahlmeldesystem anzugeben, die breiter anwendbar sind.

Gelöst wird diese Aufgabe durch ein Verfahren mit den Merkmalen des Patentanspruchs 1, durch ein Verfahren mit den Merkmalen des Patentanspruchs 8, durch ein Diebstahlmeldesystem mit den Merkmalen des Patentanspruchs 11, durch ein Computerprogrammprodukt mit den Merkmalen des Patentanspruchs 12 sowie durch ein computerlesbares Speichermedium mit den Merkmalen des Patentanspruches 13.

Gemäß einem ersten Aspekt der Erfindung wird zur Diebstahlerkennung eines ersten Maschinenlernmoduls, das darauf trainiert ist, anhand eines Eingabesignals ein Ausgabesignal zum Steuern einer Maschine auszugeben, eine Maskierungsinformation eingelesen, durch die ein hinsichtlich der Steuerung der Maschine tolerierbarer Teil des Ausgabesignals spezifiziert wird. Weiterhin wird das erste Maschinenlernmodul um eine zusätzliche Ausgabeschicht erweitert, in die
- das Ausgabesignal eingespeist wird,
- die anhand der Maskierungsinformation in den tolerierbaren Teil des Ausgabesignals ein digitales Wasserzeichen einfügt und
- die das so modifizierte Ausgabesignal ausgibt.

Das erweiterte erste Maschinenlernmodul wird dann zu einem Anwender übermittelt. Bei einem empfangenen zweiten Maschinenlernmodul wird anhand der Maskierungsinformation geprüft, ob der tolerierbare Teil eines Ausgabesignals des zweiten Maschinenlernmoduls das digitale Wasserzeichen enthält. Abhängig vom Prüfungsergebnis wird dann ein Alarmsignal ausgegeben. Durch eine Erkennung des digitalen Wasserzeichens kann in der Regel eine Authentizität des zweiten Maschinenlernmoduls belegt werden.

Ein Vorteil der Erfindung ist insbesondere darin zu sehen, dass zum Schutz des ersten Maschinenlernmoduls kein Zugriff auf dessen Trainingsprozess oder dessen Modellparameter erforderlich ist. Stattdessen können auch fertig trainierte Maschinenlernmodule insbesondere auch von Drittanbietern gegen unkontrollierte Verbreitung geschützt werden. Darüber hinaus ist das erfindungsgemäße Verfahren flexibel anwendbar und insbesondere nicht auf künstliche neuronale Netze beschränkt. In vielen Fällen kann das erfindungsgemäße Verfahren gewissermaßen als Black-Box-Verfahren eingesetzt werden.

Gemäß einer vorteilhaften Ausführungsform der Erfindung können durch die zusätzliche Ausgabeschicht ausgegebene Ausgabesignale mittels eines Zählers gezählt werden. Das digitale Wasserzeichen kann dann abhängig von einem Zählerstand des Zählers in den tolerierbaren Teil eines jeweiligen Ausgabesignals eingefügt werden. Auf diese Weise kann das Ausgabesignal z.B. zyklisch modifiziert oder moduliert werden. Insbesondere können das Wasserzeichen oder Teile davon jeweils nur nach einer vorgegebenen Anzahl von Ausgabesignalen in ein dann anliegendes Ausgabesignal eingefügt werden. Auf diese Weise kann es für einen Unberechtigten effektiv erschwert werden, das digitale Wasserzeichen aus den Ausgabesignalen zu erschließen.

Gemäß einer weiteren vorteilhaften Ausführungsform der Erfindung können abhängig vom Zählerstand unterschiedliche Teile des digitalen Wasserzeichens selektiert und in den tolerierbaren Teil eines jeweiligen Ausgabesignals eingefügt werden. Auf diese Weise kann das digitale Wasserzeichen z.B. zyklisch über mehrere Ausgabesignale verteilt werden. Bei einem durch einen Bitstring der Länge N dargestellten digitalen Wasserzeichen kann so durch Berechnung eines Divisionsrests des Zählerstandes bezüglich N entschieden werden, welches der N Bits in ein betreffendes Ausgabesignal eingefügt wird.

Gemäß einer weiteren vorteilhaften Ausführungsform der Erfindung kann das digitale Wasserzeichen abhängig von einem Zufallsprozess in den tolerierbaren Teil eines jeweiligen Ausgabesignals eingefügt werden.

Nach einer weiteren vorteilhaften Ausführungsform der Erfindung kann eine Schnittstelle zwischen dem ersten Maschinenlernmodul und der zusätzlichen Ausgabeschicht gegen äußeren Zugriff geschützt werden. Insbesondere kann die zusätzliche Ausgabeschicht mit dem ersten Maschinenlernmodul in einem vorzugsweise signaturgeschützten Daten- oder Programmcontainer, z. B. einem Docker-Container gekapselt werden. Auf diese Weise kann der Wasserzeichenschutz gegen unberechtigte Manipulation gesichert werden.

Gemäß einer weiteren vorteilhaften Ausführungsform der Erfindung kann das zweite Maschinenlernmodul zum Steuern der Maschine eingesetzt werden, wobei das Alarmsignal dann ausgegeben wird, falls der tolerierbare Teil des Ausgabesignals des zweiten Maschinenlernmoduls das digitale Wasserzeichen nicht enthält. Auf diese Weise kann in vielen Fällen sichergestellt werden, dass nur autorisierte Kopien eines Maschinenlernmoduls zum Steuern der Maschine eingesetzt werden oder einsetzbar sind.

Nach einer weiteren vorteilhaften Ausführungsform der Erfindung kann das zweite Maschinenlernmodul in einer Edge-Computing-Umgebung installiert und angesteuert werden. Weiterhin kann geprüft werden, ob der tolerierbare Teil des Ausgabesignals des zweiten Maschinenlernmoduls das digitale Wasserzeichen enthält. Abhängig vom Prüfungsergebnis kann dann das zweite Maschinenlernmodul zum Steuern der Maschine eingesetzt werden.

Gemäß einem zweiten Aspekt der Erfindung wird zur Diebstahlerkennung eines ersten Maschinenlernmoduls, das darauf trainiert ist, anhand eines Eingabesignals ein Ausgabesignal zum Steuern einer Maschine auszugeben, ein bei der Steuerung der Maschine nicht auftretendes Test-Eingabesignal ermittelt. Das Test-Eingabesignal wird in das erste Maschinenlernmodul eingespeist und ein resultierendes Ausgabesignal des ersten Maschinenlernmoduls wird als digitales Wasserzeichen gespeichert. Das erste Maschinenlernmodul wird dann zu einem Anwender übermittelt. Bei einem empfangenen zweiten Maschinenlernmodul wird das Test-Eingabesignal in das zweite Maschinenlernmodul eingespeist und es wird geprüft, ob das resultierende Ausgabesignal mit dem gespeicherten digitalen Wasserzeichen übereinstimmt. Abhängig vom Prüfungsergebnis wird dann ein Alarmsignal ausgegeben.

Gemäß einer vorteilhaften Ausführungsform des vorstehenden Verfahrens kann das erste Maschinenlernmodul um eine zusätzliche Eingabeschicht erweitert werden. Die zusätzliche Eingabeschicht kann ein eingehendes Eingabesignal dahingehend prüfen, ob es mit dem Test-Eingabesignal übereinstimmt und bei positivem Prüfungsergebnis das erste Maschinenlernmodul dazu veranlassen, ein Ausgabesignal auszugeben, durch das charakteristische Eigenschaften des ersten Maschinenlernmoduls spezifiziert werden. Die charakteristischen Eigenschaften können als digitales Wasserzeichen oder als ein Teil davon verwendet werden. Als charakteristische Eigenschaften können z.B. bei einem künstlichen neuronalen Netz eine Anzahl von neuronalen Schichten, eine Anzahl von Neuronen oder andere Topologie- oder Modellparameter spezifiziert werden. Insofern derartige Modellparameter bei unabhängig erstellten Maschinenlernmodulen mit sehr hoher Wahrscheinlichkeit nicht vollständig übereinstimmen, kann ein größerer Satz solcher Modellparameter in vielen Fällen als digitaler Fingerabdruck eines Maschinenlernmoduls und damit auch als Wasserzeichen dienen.

Nach einer weiteren vorteilhaften Ausführungsform der erfindungsgemäßen Verfahren kann ein das digitale Wasserzeichen enthaltendes Ausgabesignal über einen anderen Ausgabekanal ausgegeben werden als ein das digitale Wasserzeichen nicht enthaltendes Ausgabesignal. Insbesondere kann ein das digitale Wasserzeichen enthaltendes Ausgabesignal oder ein daraus abgeleitetes Signal als Steuersignal zur Maschine übermittelt werden, während ein das digitale Wasserzeichen nicht enthaltendes Ausgabesignal über einen Servicekanal ausgegeben wird. Auf diese Weise kann die zu steuernde Maschine vor einer Steuerung durch nicht authentische Maschinenlernmodule geschützt werden.

Die Verfahren gemäß dem ersten Aspekt der Erfindung und dem zweiten Aspekt der Erfindung können auch miteinander kombiniert werden. Auf diese Weise kann die Zuverlässigkeit der Diebstahlerkennung in vielen Fällen gesteigert werden.

Zur Durchführung der erfindungsgemäßen Verfahren sind ein Diebstahlmeldesystem, ein Computerprogrammprodukt sowie ein computerlesbares, vorzugsweise nichtflüchtiges Speichermedium vorgesehen.

Ein Ausführungsbeispiel der Erfindung wird nachfolgend anhand der Zeichnung näher erläutert. Dabei veranschaulichen jeweils in schematischer Darstellung
- Figur 1: eine Steuerung einer Maschine mittels eines Maschinenlernmoduls,
- Figur 2: ein Diebstahlmeldesystem für ein Maschinelernmodul,
- Figur 3: ein erstes Ausführungsbeispiel einer erfindungsgemäßen Überprüfung eines Maschinenlernmoduls,
- Figur 4: ein zweites Ausführungsbeispiel einer erfindungsgemäßen Überprüfung eines Maschinenlernmoduls,
- Figur 5: ein drittes Ausführungsbeispiel einer erfindungsgemäßen Überprüfung eines Maschinenlernmoduls.

Insofern in den Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

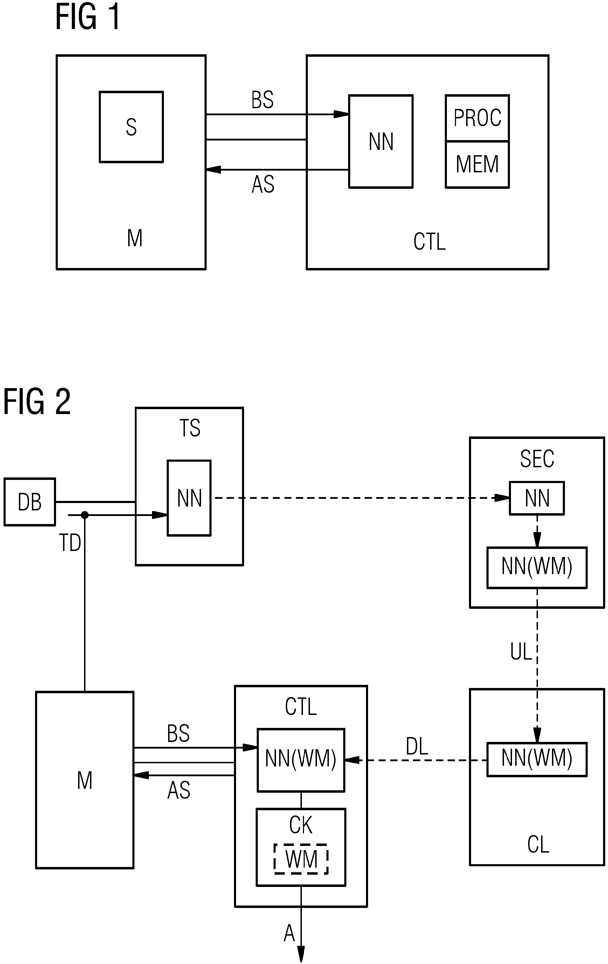

Figur 1 veranschaulicht eine Steuerung einer Maschine M mittels eines trainierten Maschinenlernmoduls NN in schematischer Darstellung. Die Maschine M kann hierbei insbesondere ein Roboter, ein Motor, eine Fertigungsanlage, eine Werkzeugmaschine, eine Turbine, eine Verbrennungskraftmaschine und/oder ein Kraftfahrzeug sein oder eine solche Maschine umfassen. Für das vorliegende Ausführungsbeispiel sei angenommen, dass die Maschine M ein Fertigungsroboter ist.

Die Maschine M wird durch eine an diese gekoppelte Maschinensteuerung CTL gesteuert. Letztere ist in Figur 1 extern zur Maschine M dargestellt. Alternativ dazu kann die Maschinensteuerung CTL auch ganz oder teilweise in die Maschine M integriert sein.

Die Maschinensteuerung CTL verfügt über einen oder mehrere Prozessoren PROC zum Ausführen von erfindungsgemäßen Verfahrensschritten sowie über einen oder mehrere Speicher MEM zum Speichern von zu verarbeitenden Daten.

Die Maschine M weist eine Sensorik S auf, durch die fortlaufend Betriebsparameter der Maschine M sowie andere Messwerte gemessen werden. Die von der Sensorik S ermittelten Messwerte werden zusammen mit anderen Betriebsdaten der Maschine M in Form von Betriebssignalen BS von der Maschine M zur Maschinensteuerung CTL übermittelt.

Die Betriebssignale BS umfassen insbesondere Sensordaten und/oder Messwerte der Sensorik S, Steuersignale und/oder Zustandssignale der Maschine M. Die Zustandssignale spezifizieren hierbei jeweils einen Betriebszustand der Maschine M oder von einer oder mehreren ihrer Komponenten, vorzugsweise im Zeitverlauf. Insbesondere können durch die Betriebssignale BS eine Leistung, eine Drehzahl, ein Drehmoment, eine Bewegungsgeschwindigkeit, eine ausgeübte oder einwirkende Kraft, eine Temperatur, ein Druck, ein aktueller Ressourcenverbrauch, vorhandene Ressourcen, ein Schadstoffausstoß, Vibrationen, ein Verschleiß und/oder eine Belastung der Maschine M oder von Komponenten der Maschine M quantifiziert werden. Vorzugsweise werden die Betriebssignale BS jeweils durch numerische Datenvektoren dargestellt und in dieser Form zur Maschinensteuerung CTL übermittelt.

Die Maschinensteuerung CTL verfügt weiter über ein trainiertes Maschinenlernmodul NN zum Steuern der Maschine M. Das

Maschinenlernmodul NN ist darauf trainiert, anhand eines eingespeisten Eingabesignals ein Ausgabesignal auszugeben, mittels dessen die Maschine M in optimierter Weise gesteuert werden kann. Zum Training eines solchen Maschinenlernmoduls NN steht eine Vielzahl effizienter Verfahren des maschinellen Lernens zur Verfügung, insbesondere Verfahren des bestärkenden Lernens oder Reinforcement-Learning. Auf das Training des Maschinenlernmoduls NN wird unten noch näher eingegangen. Das Maschinenlernmodul NN kann insbesondere als künstliches neuronales Netz implementiert werden.

Zum Steuern der Maschine M werden die Betriebssignale BS oder daraus abgeleitete Betriebsdaten als Eingabesignal in eine Eingabeschicht des trainierten Maschinenlernmoduls NN eingespeist. Aus dem Eingabesignal wird durch das trainierte Maschinenlernmodul NN ein Ausgabesignal AS abgeleitet. Das Ausgabesignal AS oder ein daraus abgeleitetes Signal wird dann als Steuersignal zur Maschine M übermittelt, um diese in optimierter Weise zu steuern.

Figur 2 veranschaulicht ein Diebstahlmeldesystem für ein Maschinenlernmodul NN.

Das Maschinenlernmodul NN, z. B. ein künstliches neuronales Netz, wird in einem Trainingssystem TS darauf trainiert, anhand eines eingespeisten Eingabesignals ein Ausgabesignal auszugeben, mittels dessen die Maschine M in optimierter Weise gesteuert werden kann. Das Training wird anhand einer großen Menge von Trainingsdaten TD ausgeführt, die aus einer Datenbank DB oder von der Maschine M oder einer dazu ähnlichen Maschine stammen.

Unter einem Training sei hierbei allgemein eine Optimierung einer Abbildung eines Eingabesignals eines Maschinenlernmoduls auf dessen Ausgabesignal verstanden. Diese Abbildung wird nach vorgegebenen gelernten und/oder zu lernenden Kriterien während einer Trainingsphase optimiert. Als Kriterium können insbesondere bei Prädiktionsmodellen ein Prädiktionsfehler und bei Steuermodellen ein Erfolg einer Steueraktion herangezogen werden. Durch das Training können beispielsweise Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden.

Für derartige Optimierungsprobleme auf dem Gebiet des maschinellen Lernens sind eine Vielzahl von effizienten Optimierungsverfahren verfügbar, insbesondere gradientenbasierte Optimierungsverfahren, gradientenfreie Optimierungsverfahren, Rückpropagationsverfahren, Partikelschwarmoptimierungen, genetische Optimierungsverfahren und/oder populationsbasierte Optimierungsverfahren. Trainieren lassen sich insbesondere künstliche neuronale Netze, rekurrente neuronale Netze, faltende neuronale Netze, Perzeptrone, bayessche neuronale Netze, Autoencoder, variationale Autoencoder, Gauß-Prozesse, Deep-Learning-Architekturen, Support-Vektor-Maschinen, datengetriebene Regressionsmodelle, k-Nächste-Nachbarn-Klassifikatoren, physikalische Modelle und/oder Entscheidungsbäume.

Im Fall des zum Steuern der Maschine M vorgesehenen Maschinenlernmoduls NN werden diesem in den Trainingsdaten TD enthaltene Betriebssignale der Maschine M als Eingabesignale zugeführt. Im Zuge des Trainings werden neuronale Gewichte des Maschinenlernmoduls NN durch ein vorstehend erwähntes Optimierungsverfahren derart eingestellt, dass die Maschine M mittels der vom Maschinenlernmodul NN aus den Eingabesignalen abgeleiteten Ausgabesignale in optimierter Weise gesteuert wird. Zur Bewertung einer optimierten Steuerung der Maschine M kann z. B. eine Performanz der Maschine M, z. B. eine Leistung, ein Wirkungsgrad etc. gemessen und als Optimierungskriterium verwendet werden.

Das so trainierte Maschinenlernmodul NN wird anschließend vom Trainingssystem TS zu einem Sicherungssystem SEC übermittelt. Das Sicherungssystem SEC dient dem Zweck, das trainierte Maschinenlernmodul NN gegen unkontrollierte oder unberechtigte Verbreitung zu schützen, indem dem trainierten Maschinenlernmodul NN ein digitales Wasserzeichen WM aufgeprägt wird oder ein digitaler Fingerabdruck des trainierten Maschinenlernmoduls NN ermittelt wird, der als digitales Wasserzeichen WM verwendet werden kann.

Das durch das Wasserzeichen WM gesicherte Maschinenlernmodul NN(WM) wird vom Sicherungssystem SEC durch einen Upload UL in eine Cloud CL, insbesondere in einen App-Store der Cloud CL übertragen.

Aus der Cloud CL oder ihrem App-Store wird das geschützte Maschinenlernmodul NN(WM) durch einen Download DL von einem Anwender heruntergeladen, der mit Hilfe dieses Maschinenlernmoduls NN(WM) die Maschine M steuern möchte.

Zu diesem Zweck wird das geschützte Maschinenlernmodul NN(WM) durch die Maschinensteuerung CTL in einer Edge-Computing-Umgebung oder in der Cloud CL installiert und in einer Laufzeitumgebung der Edge-Computing-Umgebung oder der Cloud CL ausgeführt. Dabei werden dem Maschinenlernmodul NN(WM) Betriebssignale BS der Maschine M, wie oben beschrieben, als Eingabesignale zugeführt. Die daraus resultierenden Ausgabesignale AS des Maschinenlernmoduls NN(WM) oder daraus abgeleitete Signale werden, wie ebenfalls oben beschrieben, von der Maschinensteuerung CTL als Steuersignale zur Maschine M übermittelt.

Die Edge-Computing-Umgebung kann als Teil einer Edge-Computing-Plattform, z. B. der "Industrial Edge" der Firma Siemens AG, implementiert sein. Das geschützte Maschinenlernmodul NN(WM) kann dabei z. B. in einem Docker-Container gekapselt sein.

Die Maschinensteuerung CTL enthält weiterhin eine mit dem Maschinenlernmodul NN(WM) gekoppelte Prüfeinrichtung CK, durch die geprüft wird, ob ein Ausgabesignal AS des Maschinenlernmoduls NN(WM) mit dem Wasserzeichen WM markiert ist. Zur Prüfung kann durch die Prüfeinrichtung CK insbesondere ein Mustervergleich zwischen dem Ausgabesignal AS oder einem Teil davon und dem Wasserzeichen WM durchgeführt werden. Als Kriterium für ein Vorhandensein des Wasserzeichens WM kann dabei eine Übereinstimmung, eine näherungsweise Übereinstimmung oder eine Ähnlichkeit der verglichenen Muster herangezogen werden. Insbesondere kann ein ggf. gewichteter euklidischer Abstand zwischen Datenvektoren ermittelt werden, durch die die verglichenen Muster repräsentiert werden. Ein Vorhandensein des Wasserzeichens WM kann z. B. dann signalisiert werden, wenn der euklidische Abstand einen vorgegebenen Schwellwert unterschreitet.

Sofern durch die Prüfeinrichtung CK das Wasserzeichen WM in den Ausgabesignalen AS erkannt wird, werden die Ausgabesignale AS oder daraus abgeleitete Steuersignale über einen Steuerkanal zum Steuern der Maschine M an diese übertragen. Andernfalls werden die Ausgabesignale AS über einen gesonderten Servicekanal der Maschinensteuerung CTL zusammen mit einem Alarmsignal A ausgegeben. Auf diese Weise kann verhindert werden, dass die Maschine M mittels eines nicht autorisierten Maschinenlernmoduls gesteuert wird und gleichzeitig kann der Anwender oder ein Ersteller des Maschinenlernmoduls mittels des Alarmsignals A über ein nicht autorisiertes oder gefälschtes Maschinenlernmodul informiert werden.

Alternativ dazu kann die Prüfeinrichtung CK bei Erkennung des Wasserzeichens WM ein Alarmsignal ausgeben und z. B. an einen Ersteller des Maschinenlernmoduls übermitteln, um diesen darüber zu informieren, dass ein vorliegendes Maschinenlernmodul von ihm stammt und möglicherweise unberechtigt verwendet oder in Verkehr gebracht wurde.

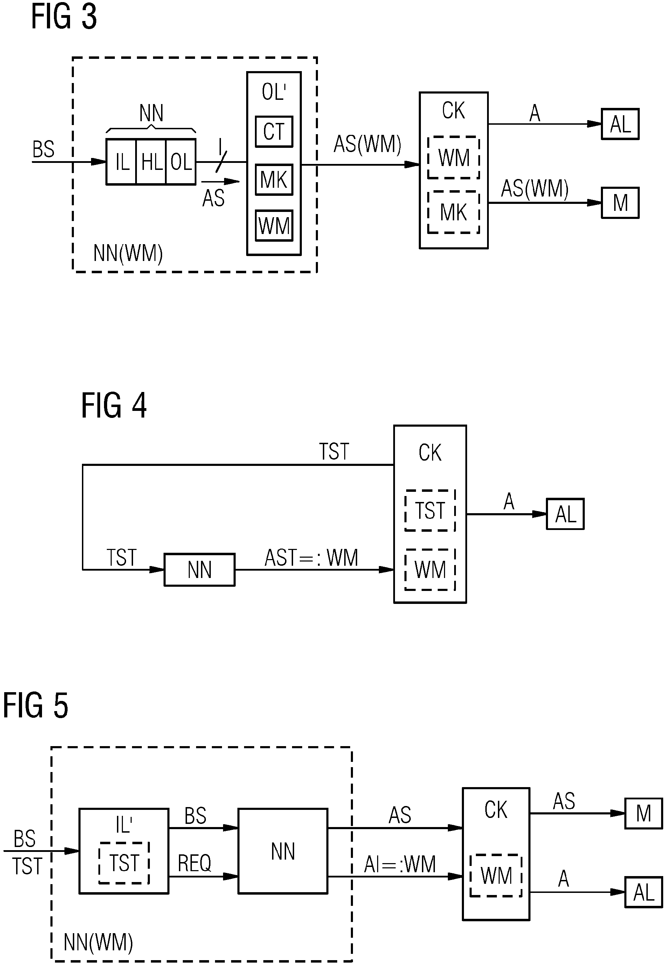

Figur 3 veranschaulicht ein erstes Ausführungsbeispiel einer erfindungsgemäßen Überprüfung eines trainierten Maschinenlernmoduls NN, das vorzugsweise als künstliches neuronales Netz ausgestaltet ist. Letzteres verfügt über eine Eingabeschicht IL, eine oder mehrere verdeckte Schichten HL sowie über eine Ausgabeschicht OL.

Zum Schutz des trainierten Maschinenlernmoduls NN wird an dessen Ausgabeschicht OL, vorzugsweise durch das Sicherungssystem SEC eine zusätzliche Ausgabeschicht OL' über eine Schnittstelle I gekoppelt. Die zusätzliche Ausgabeschicht OL' kann eine neuronale Schicht, eine Softwareschicht oder eine Aufrufroutine für das trainierte Maschinenlernmodul NN sein.

Die zusätzliche Ausgabeschicht OL' dient zum Einfügen eines eindeutigen digitalen Wasserzeichens WM in Ausgabesignale AS des trainierten Maschinenlernmoduls NN. Als digitales Wasserzeichen WM kann insbesondere ein Bitstring mit vorgegebener Länge N vorgesehen sein. Das vorgesehene digitale Wasserzeichen WM ist in der zusätzlichen Ausgabeschicht OL' gespeichert.

Die Schnittstelle I zwischen dem trainierten Maschinenlernmodul NN und der zusätzlichen Ausgabeschicht OL', genauer zwischen der Ausgabeschicht OL und der zusätzlichen Ausgabeschicht OL' wird gegen unberechtigten Zugriff, z. B. durch Verschlüsselung oder Obfuskation geschützt. Die zusätzliche Ausgabeschicht OL' wird vorzugsweise in möglichst untrennbarer Weise mit dem trainierten Maschinenlernmodul NN kombiniert und/oder gekapselt.

Durch die zusätzliche Ausgabeschicht OL' wird das trainierte Maschinenlernmodul NN zu einem durch das digitale Wasserzeichen WM geschützten Maschinenlernmodul NN(WM) erweitert. Das geschützte Maschinenlernmodul NN(WM) kann vorzugsweise in einem Software- oder Datencontainer gespeichert oder gekapselt sein, der bei Auftrennung seine Funktionen verliert. Insbesondere kann eine schlüssel- oder signaturgeschützte Softwarekapselung oder Datenkapselung verwendet werden.

Die zusätzliche Ausgabeschicht OL' enthält neben dem digitalen Wasserzeichen WM noch eine Maskierungsinformation MK sowie einen Zähler CT. Durch die Maskierungsinformation MK wird ein hinsichtlich der Steuerung der Maschine M tolerierbarer Teil des Ausgabesignals AS spezifiziert. Im vorliegenden Ausführungsbeispiel werden durch die Maskierungsinformation MK diejenigen Bits der Ausgabesignale AS spezifiziert, die den niedrigsten oder einen niedrigen Stellenwert aufweisen. Derartige Bits werden häufig auch als least-significant-bits bezeichnet.

Der Zähler CT dient zum Zählen der Ausgabesignale AS bzw. der Auswertungen des trainierten Maschinenlernmoduls NN. Vorzugsweise ist ein maximaler Zählerstand für den Zähler CT vorgegeben, mit dessen Überschreiten der Zählerstand wieder auf einen Anfangszählerstand zurückgesetzt wird. In diesem Fall werden die Zählwerte des Zählers CT zyklisch durchlaufen. Als maximaler Zählerstand kann beispielsweise die Bitlänge N des digitalen Wasserzeichens WM vorgegeben werden.

Das durch das digitale Wasserzeichen WM geschützte Maschinenlernmodul NN(WM) kann dann, z. B. wie in Zusammenhang mit Figur 2 beschrieben, zu einem Anwender weitergegeben werden.

Bei der Anwendung des geschützten Maschinenlernmoduls NN(WM) zur Steuerung der Maschine M werden deren Betriebssignale BS in die Eingabeschicht IL als Eingabesignale eingespeist. Aus den Betriebssignalen BS werden durch die Eingabeschicht IL, die verdeckten Schichten HL und die Ausgabeschicht OL die Ausgabesignale AS des trainierten Maschinenlernmoduls NN abgeleitet.

Die Ausgabesignale AS werden von der Ausgabeschicht OL über die Schnittstelle I in die zusätzliche Ausgabeschicht OL' eingespeist. Wie oben schon erwähnt, werden die eingespeisten Ausgabesignale AS bzw. die entsprechenden Auswertungen des trainierten Maschinenlernmoduls NN durch den Zähler CT gezählt. Abhängig von einem jeweiligen Zählerstand des Zählers CT wird dann durch die zusätzliche Ausgabeschicht OL' das digitale Wasserzeichen WM in den durch die Maskierungsinformation MK spezifizierten Teil der Ausgabesignale AS eingefügt.

Vorzugsweise kann abhängig vom Zählerstand ein Bit des digitalen Wasserzeichens WM selektiert und das selektierte Bit in das niedrigstwertige Bit des betreffenden Ausgabesignals AS eingesetzt werden. Insbesondere kann bei einem Zählerstand K das K-te Bit des digitalen Wasserzeichens WM in das niedrigstwertige Bit des betreffenden Ausgabesignals AS eingesetzt werden. Auf diese Weise kann das digitale Wasserzeichen WM zyklisch über mehrere Ausgabesignale verteilt werden.

Alternativ oder zusätzlich kann vorgesehen sein, dass nur jedes L-te Ausgabesignal AS durch das digitale Wasserzeichen WM oder einen Teil davon modifiziert wird, wobei L eine vorgegebene Anzahl von Modellauswertungen ist. Auf diese Weise kann es Unberechtigten erschwert werden, das digitale Wasserzeichen WM aus Ausgabesignalen zu rekonstruieren.

Durch das Einfügen des digitalen Wasserzeichens WM in die Ausgabesignale AS des trainierten Maschinenlernmoduls NN werden durch die zusätzliche Ausgabeschicht OL' modifizierte Ausgabesignale AS(WM) erzeugt, die als Ausgabesignale des geschützten Maschinenlernmoduls NN(WM) ausgegeben werden.

Die modifizierten Ausgabesignale AS(WM) werden zu einer Prüfeinrichtung CK übermittelt. Letztere prüft anhand der dort gespeicherten Maskierungsinformation MK, ob die modifizierten Ausgabesignale AS(WM) in den durch die Maskierungsinformationen MK spezifizierten Teilen, also beispielsweise in den niedrigstwertigen Bits, das in der Prüfeinrichtung CK gespeicherte digitale Wasserzeichen WM enthalten. Falls dies der Fall ist, werden die modifizierten Ausgabesignale AS(WM) oder daraus abgeleitete Steuersignale über einen Steuerkanal zum Steuern der Maschine M an diese übermittelt. Andernfalls wird über einen Servicekanal ein Alarmsignal A an einen Alarmgeber AL übermittelt. Auf diese Weise kann erreicht werden, dass nur autorisierte Kopien des trainierten Maschinenlernmoduls zum Steuern der Maschine M verwendet werden bzw. zu diesem Zweck nutzbar sind.

Figur 4 veranschaulicht ein zweites Ausführungsbeispiel einer erfindungsgemäßen Überprüfung eines vorliegenden trainierten Maschinenlernmoduls NN.

Zur späteren Überprüfung wird dem trainierten Maschinenlernmodul NN, vorzugsweise durch das Sicherungssystem SEC mindestens ein bei der Steuerung der Maschine M nicht auftretendes Test-Eingabesignal TST als Eingabesignal zugeführt. Ein solches Test-Eingabesignal TST kann insbesondere zufallsbasiert generiert und mit gespeicherten, aus dem Betrieb der Maschine M über einen repräsentativen Zeitraum auftretenden Betriebssignalen verglichen werden. Falls ein, z. B. euklidischer Abstand zu allen aufgetretenen Betriebssignalen größer als ein vorgegebener Schwellwert ist, kann ein so generiertes Signal als Test-Eingabesignal TST akzeptiert werden.

Das aus dem Test-Eingabesignal TST durch das trainierte Maschinenlernmodul NN abgeleitete Ausgabesignal AST wird dann als digitales Wasserzeichen WM zusammen mit dem Test-Eingabesignal TST in einer Prüfeinrichtung CK gespeichert.

Zur Überprüfung eines vorliegenden trainierten Maschinenlernmoduls, hier NN, durch die Prüfeinrichtung CK speist Letztere das gespeicherte Test-Eingabesignal TST als Eingabesignal in das trainierte Maschinenlernmodul NN ein. Ein aus dem Test-Eingabesignal TST durch das trainierte Maschinenlernmodul NN abgeleitetes Ausgabesignal wird dann zur Prüfeinrichtung CK übermittelt und von dieser mit dem gespeicherten Ausgabesignal AST verglichen.

Sofern das aus dem Test-Eingabesignal TST resultierende Ausgabesignal mit dem gespeicherten Ausgabesignal AST gegebenenfalls innerhalb eines vorgegebenen Toleranzbereichs übereinstimmt, wird das überprüfte Maschinenlernmodul NN als vom Ersteller des trainierten Maschinenlernmoduls NN oder vom Sicherungssystem SEC stammend erkannt. Das so verifizierte Maschinenlernmodul NN kann dann zum autorisierten Steuern der Maschine M verwendet werden. Andernfalls wird, wie oben beschrieben, ein Alarmsignal A vorzugsweise über einen Servicekanal zu einem Alarmgeber AL übermittelt.

Ein Vorteil der vorstehenden Ausführungsvariante ist insbesondere darin zu sehen, dass ein zu sicherndes

Maschinenlernmodul NN vor seiner Weitergabe nicht modifiziert werden muss, sondern anhand seiner Reaktion auf ein anomales Test-Eingabesignal TST identifiziert werden kann. Dieser Identifikation liegt die Beobachtung zugrunde, dass eine Reaktion eines trainierten Maschinenlernmoduls auf ein stark vom Normalbetrieb abweichendes Eingabesignal kaum durch ein anderweitig trainiertes Maschinenlernmodul reproduzierbar ist. Eine solche Reaktion kann somit in der Regel als digitaler Fingerabdruck bzw. als eindeutiges Wasserzeichen verwendet werden.

Figur 5 veranschaulicht ein drittes Ausführungsbeispiel einer erfindungsgemäßen Überprüfung eines trainierten Maschinenlernmoduls.

Nach dieser Ausführungsvariante wird zum Schutz eines trainierten Maschinenlernmoduls NN dieses durch eine zusätzliche Eingabeschicht IL' zu einem geschützten Maschinenlernmodul NN(WM) erweitert.

Die zusätzliche Eingabeschicht IL' ist mit dem trainierten Maschinenlernmodul NN über eine gegen unberechtigten Zugriff geschützte Schnittstelle, insbesondere eine Steuerschnittstelle oder Informationsschnittstelle gekoppelt. Die zusätzliche Eingabeschicht IL' kann als Softwareschicht, als Eingaberoutine, als Aufrufroutine für eine Ausführung des Maschinenlernmoduls NN und/oder als neuronale Schicht ausgestaltet sein. In der zusätzlichen Eingabeschicht IL' ist ein bei der Steuerung der Maschine M nicht auftretendes Test-Eingabesignal TST gespeichert, das wie oben beschrieben erzeugt werden kann.

Anhand des gespeicherten Test-Eingabesignals TST überprüft die zusätzliche Eingabeschicht IL' zugeführte Eingabesignale daraufhin, ob sie mit dem Test-Eingabesignal TST, gegebenenfalls innerhalb eines vorgegebenen Toleranzbereichs übereinstimmen. Falls dies der Fall ist, veranlasst die zusätzliche Eingabeschicht IL' das trainierte Maschinenlernmodul NN durch ein Anforderungssignal REQ dazu, eine Architekturinformation AI als Ausgabesignal auszugeben, durch die charakteristische Eigenschaften des trainierten Maschinenlernmoduls NN spezifiziert werden. Das Anforderungssignal REQ kann hierbei an das trainierte Maschinenlernmodul NN oder an einen Interpreter des trainierten Maschinenlernmoduls NN übermittelt werden.

Die Architekturinformation AI kann vorzugsweise über eine Steuerschnittstelle des trainierten Maschinenlernmoduls NN ausgegeben werden. Die durch die Architekturinformation AI spezifizierten charakteristischen Eigenschaften des Maschinenlernmoduls NN können insbesondere dessen Modellspezifikation betreffen, z. B. eine Anzahl von neuronalen Schichten, eine Anzahl von Neuronen oder andere Topologieparameter, andere Architekturangaben und/oder Lernparameter des trainierten Maschinenlernmoduls NN.

Viele Maschinenlernmodule sehen eine Ausgabe einer Architekturinformation AI standardmäßig vor. Im vorliegenden Fall wird eine derartige Ausgabe durch die Detektion des Test-Eingabesignals TST durch die zusätzliche Eingabeschicht IL' getriggert.

Die ausgegebene Architekturinformation AI wird als Wasserzeichen WM in der Prüfeinrichtung CK gespeichert. Das durch die zusätzliche Eingabeschicht IL' erweiterte Maschinenlernmodul NN(WM) kann anschließend weitergegeben werden bzw. in die Cloud CL hochgeladen werden.

Zur Überprüfung eines vorliegenden Maschinenlernmoduls, hier NN(WM) werden diesem neben den Betriebssignalen BS der Maschine M zumindest stichprobenartig auch das Test-Eingabesignal TST als Eingabesignal zugeführt. Die zusätzliche Eingabeschicht IL' überprüft die eingespeisten Eingabesignale daraufhin, ob sie mit dem Test-Eingabesignal TST, zumindest innerhalb eines vorgegebenen Toleranzbereichs übereinstimmen. Bei Übereinstimmung veranlasst die zusätzliche Eingabeschicht IL' das trainierte Maschinenlernmodul NN mittels des Anforderungssignals REQ dazu, eine Architekturinformation AI auszugeben. Letztere wird vom trainierten Maschinenlernmodul NN zur Prüfeinrichtung CK übermittelt und dort mit dem gespeicherten Wasserzeichen WM, d. h. mit der gespeicherten Architekturinformation AI verglichen.

Bei Übereinstimmung wird das überprüfte Maschinenlernmodul NN(WM) durch die Prüfeinrichtung CK als vom Ersteller des trainierten Maschinenlernmoduls NN oder vom Sicherungssystem SEC stammend erkannt. In diesem Fall kann das vorliegende Maschinenlernmodul NN(WM) zum Steuern der Maschine M verwendet werden. D. h. im weiteren Verlauf in das Maschinenlernmodul NN(WM) eingespeiste Betriebssignale BS werden über die zusätzliche Eingabeschicht IL' an das trainierte Maschinenlernmodul NN weitergegeben. Dessen daraus resultierende Ausgabesignale AS oder daraus abgeleitete Steuersignale werden dann von der Prüfeinrichtung CK zur Maschine M übermittelt.

Bei Nichtübereinstimmung der vom vorliegenden Maschinenlernmodul ausgegebenen Architekturinformation AI mit dem in der Prüfeinrichtung CK gespeicherten Wasserzeichen WM wird dieses Maschinenlernmodul entsprechend als nicht authentisch gewertet. In diesem Fall kann, wie oben beschrieben, ein Alarmsignal A von der Prüfeinrichtung CK zu einem Alarmgeber AL übermittelt werden.

## Patentansprüche

1. Computerimplementiertes Verfahren zur Diebstahlerkennung eines trainierten Maschinenlernmoduls (NN), wobei
a) ein erstes Maschinenlernmodul (NN) bereitgestellt wird, das darauf trainiert ist, anhand eines Eingabesignals (BS) ein Ausgabesignal (AS) zum Steuern einer Maschine (M) auszugeben,
b) eine Maskierungsinformation (MK) eingelesen wird, durch die ein hinsichtlich der Steuerung der Maschine (M) tolerierbarer Teil des Ausgabesignals (AS) spezifiziert wird,
c) das erste Maschinenlernmodul (NN) um eine zusätzliche Ausgabeschicht (OL') erweitert wird,
- in die das Ausgabesignal (AS) eingespeist wird,
- die anhand der Maskierungsinformation (MK) in den tolerierbaren Teil des Ausgabesignals (AS) ein digitales Wasserzeichen (WM) einfügt und
- die das so modifizierte Ausgabesignal (AS(WM)) ausgibt,
d) das erweiterte erste Maschinenlernmodul (NN(WM)) zu einem Anwender übermittelt wird,
e) ein zweites Maschinenlernmodul (NN(WM)) empfangen wird,
f) anhand der Maskierungsinformation (MK) geprüft wird, ob der tolerierbare Teil eines Ausgabesignals (AS) des zweiten Maschinenlernmoduls (NN(WM)) das digitale Wasserzeichen (WM) enthält, und
g) abhängig vom Prüfungsergebnis ein Alarmsignal (A) ausgegeben wird.

2. Verfahren nach einem der vorhergehenden Ansprüche, **dadurch gekennzeichnet,**
**dass** durch die zusätzliche Ausgabeschicht (OL')
- ausgegebene Ausgabesignale (AS) mittels eines Zählers (CT) gezählt werden, und
- das digitale Wasserzeichen (WM) abhängig von einem Zählerstand des Zählers (CT) in den tolerierbaren Teil eines jeweiligen Ausgabesignals (AS) eingefügt wird.

3. Verfahren nach Anspruch 2, **dadurch gekennzeichnet,**
**dass** abhängig vom Zählerstand unterschiedliche Teile des digitalen Wasserzeichens (WM) selektiert und in den tolerierbaren Teil eines jeweiligen Ausgabesignals (AS) eingefügt werden.

4. Verfahren nach einem der vorhergehenden Ansprüche, **dadurch gekennzeichnet,**
**dass** das digitale Wasserzeichen (WM) abhängig von einem Zufallsprozess in den tolerierbaren Teil eines jeweiligen Ausgabesignals (AS) eingefügt wird.

5. Verfahren nach einem der vorhergehenden Ansprüche, **dadurch gekennzeichnet,**
**dass** eine Schnittstelle (I) zwischen dem ersten Maschinenlernmodul (NN) und der zusätzlichen Ausgabeschicht (OL') gegen äußeren Zugriff geschützt wird.

6. Verfahren nach einem der vorhergehenden Ansprüche, **dadurch gekennzeichnet,**
**dass** das zweite Maschinenlernmodul (NN(WM)) zum Steuern der Maschine (M) eingesetzt wird, und
**dass** das Alarmsignal (A) ausgegeben wird, falls der tolerierbare Teil des Ausgabesignals (AS) des zweiten Maschinenlernmoduls (NN(WM)) das digitale Wasserzeichen (WM) nicht enthält.

7. Verfahren nach einem der vorhergehenden Ansprüche, **dadurch gekennzeichnet,**
**dass** das zweite Maschinenlernmodul (NN(WM)) in einer Edge-Computing-Umgebung installiert und angesteuert wird,
**dass** geprüft wird, ob der tolerierbare Teil des Ausgabesignals (AS) des zweiten Maschinenlernmoduls (NN(WM)) das digitale Wasserzeichen (WM) enthält, und
**dass** das zweite Maschinenlernmodul (NN(WM)) abhängig vom Prüfungsergebnis zum Steuern der Maschine (M) eingesetzt wird.

8. Verfahren zur Diebstahlerkennung eines trainierten Maschinenlernmoduls, wobei
a) ein erstes Maschinenlernmodul (NN) bereitgestellt wird, das darauf trainiert ist, anhand eines Eingabesignals (BS) ein Ausgabesignal (AS) zum Steuern einer Maschine (M) auszugeben,
b) ein bei der Steuerung der Maschine (M) nicht auftretendes Test-Eingabesignal (TST) ermittelt wird,
c) das Test-Eingabesignal (TST) in das erste Maschinenlernmodul (NN) eingespeist wird und ein resultierendes Ausgabesignal (AST, AI) des ersten Maschinenlernmoduls (NN) als digitales Wasserzeichen (WM) gespeichert wird,
d) das erste Maschinenlernmodul (NN) zu einem Anwender übermittelt wird,
e) ein zweites Maschinenlernmodul (NN(WM)) empfangen wird,
f) das Test-Eingabesignal (TST) in das zweite Maschinenlernmodul (NN(WM)) eingespeist wird und geprüft wird, ob das resultierende Ausgabesignal (AST, AI) mit dem gespeicherten digitalen Wasserzeichen (WM) übereinstimmt, und
g) abhängig vom Prüfungsergebnis ein Alarmsignal (A) ausgegeben wird.

9. Verfahren nach Anspruch 8, **dadurch gekennzeichnet,**
**dass** das erste Maschinenlernmodul (NN) um eine zusätzliche Eingabeschicht (IL') erweitert wird, die
- ein eingehendes Eingabesignal dahingehend prüft, ob es mit dem Test-Eingabesignal (TST) übereinstimmt und
- bei positivem Prüfungsergebnis das erste Maschinenlernmodul (NN) dazu veranlasst, ein Ausgabesignal (AI) auszugeben, durch das charakteristische Eigenschaften des ersten Maschinenlernmoduls (NN) spezifiziert werden.

10. Verfahren nach einem der vorhergehenden Ansprüche, **dadurch gekennzeichnet, dass**
ein das digitale Wasserzeichen (WM) enthaltendes Ausgabesignal über einen anderen Ausgabekanal ausgegeben wird als ein das digitale Wasserzeichen (WM) nicht enthaltendes Ausgabesignal.

11. Diebstahlmeldesystem für trainierte Maschinenlernmodule, eingerichtet zum Ausführen eines Verfahrens nach einem der vorhergehenden Ansprüche.

12. Computerprogrammprodukt eingerichtet zum Ausführen eines Verfahrens nach einem der Ansprüche 1 bis 10.

13. Computerlesbares Speichermedium mit einem Computerprogrammprodukt nach Anspruch 12.
